# EUROPÄISCHE PATENTANMELDUNG

(11) **EP 4 183 626 A1**
(43) Veröffentlichungstag der Anmeldung: **24.05.2023**
(21) Anmeldenummer: 22203461.3
(22) Anmeldetag: 25.10.2022
(51) Int. Cl.: B60P 7/08, B66C 1/12, B66C 1/18

(54) **SCHUTZELEMENT FÜR EIN ZURR- ODER ANSCHLAGMITTEL, BEFESTIGUNGSSYSTEM SOWIE VERWENDUNG EINES SCHUTZELEMENTS ODER EINES BEFESTIGUNGSSYSTEMS**

(30) Priorität: 19.11.2021 DE 202021106316 U
(71) Anmelder: Span Set Gesellschaft für Transportsysteme und technische Bänder mit beschränkter Haftung & Co. Kommanditgesellschaft, 52531 Übach-Palenberg (DE)
(72) Erfinder: Schmitz, Ralf, 52477 Alsdorf (DE)
(74) Vertreter: Cohausz & Florack

(57) **Zusammenfassung**

Schutzelement (2) für ein Zurr- oder Anschlagmittel (4) zum Heben, Spannen oder Zurren von Gegenständen (14) umfassend:
- zumindest eine flexible Unterlage (6) zur Positionierung zwischen dem Zurr- oder Anschlagmittel (4) und dem jeweiligen Gegenstand (14), sowie
- zumindest eine mit der Unterlage (6) verbundene flexible Decklage (8), dadurch gekennzeichnet,
- dass die Decklage (8) im Wesentlichen tunnelförmig und zumindest teilweise beabstandet von der Unterlage (6) aus gebildet ist.

## Beschreibung

Die vorliegende Erfindung betriff ein Schutzelement für ein Zurr- oder Anschlagmittel zum Heben, Spannen oder Zurren von Gegenständen umfassend: zumindest eine flexible Unterlage zur Positionierung zwischen dem Zurr- oder Anschlagmittel und dem jeweiligen Gegenstand, sowie zumindest eine mit der Unterlage verbundene flexible Decklage. Die vorliegende Erfindung betrifft ebenfalls ein Befestigungssystem sowie die Verwendung eines Schutzelements oder eines Befestigungssystems.

Gattungsgemäße Zurr- oder Anschlagmittel, beispielsweise Seile, Gurte oder Bänder, werden unter eine Zugkraft gesetzt, um den jeweiligen Gegenstand zu halten, anzuheben oder zu transportieren. Unter Anschlagmitteln werden dabei insbesondere die beim Heben oder Bewegen von Lasten herstellenden Verbindungsmittel zwischen der Last und der Hebe- bzw. Zugeinrichtung verstanden. Unter Zurrmitteln werden hingegen insbesondere Mittel zum Festhalten oder Fixieren von Gütern verstanden. So werden Zurrmittel insbesondere zur Ladungssicherung auf Fahrzeugen eingesetzt.

Sowohl bei einem Einsatz des Schutzelements an einem Zurrmittel als auch an einem Anschlagmittel hat das Schutzelement zum einen die Aufgabe, eine Beschädigung des jeweiligen Zurr- oder Anschlagmittels im Bereich von Kanten oder anderen Formelementen zu verhindern, an denen das Zurr- oder Anschlagmittel umgelenkt wird. Denn in diesen Bereichen kommt es zu hohen Flächenpressungen, die wiederum zu hohen Reibungskräften führen und die Gefahr mit sich bringen, dass scharfe Kanten des jeweiligen Gegenstandes in das Zurr- oder Anschlagmittel schneiden. Zudem ist es Aufgabe des Schutzelements eine Fixierung des Zurr- oder Anschlagmittels zu erreichen.

Zum Schutz gegen derartige Beschädigungen wird jeweils ein Schutzelement mit seiner Unterlage oder Schutzlage im Bereich der Umlenkstellen zwischen das jeweilige Zurr- oder Anschlagmittel und den betreffenden Gegenstand positioniert, so dass das Zurr- oder Anschlagmittel nicht mehr unmittelbar den Gegenstand berührt, sondern auf der Unterlage aufliegt. Die Unterlage selbst nimmt dabei in der Regel keine Halte- oder Spannkräfte auf, so dass sie in der Regel beispielsweise im Hinblick auf ihre Schutzfunktion optimiert gestaltet wird. Auf diese Weise lassen sich Beschädigungen des Zurr- oder Anschlagmittels verhindern, zu denen es andernfalls in Folge der beim Spannen des Zurr- oder Anschlagmittels oder beim Transport unvermeidbaren Relativbewegungen zwischen dem Zurr- oder Anschlagmittel und dem Gegenstand kommen kann.

In der Praxis hat es sich bei gattungsgemäßen Schutzelementen jedoch als problematisch erwiesen, dass zwischen dem lastaufnehmenden Zurr- oder Anschlagmittel und dem Schutzelement, insbesondere an den Umlenkstellen, eine hohe Reibung entsteht. Dies hat zur Folge, dass die vom Zurr- oder Anschlagmittel aufgenommenen bzw. aufgebrachten Kräfte von Umlenkstelle zu Umlenkstelle nicht gleichmäßig weitergeleitet werden, sondern dass es an den Umlenkstellen zu starken Belastungssprüngen im Zurr- oder Anschlagmittel kommt. Diese Belastungssprünge werden dadurch verursacht, dass das Zurr- oder Anschlagmittel im Bereich der Umlenkstellen trotz der Anwesenheit eines Schutzelements nur schlecht gleiten kann.

So führen die mangelhaften Gleiteigenschaften beispielswiese beim Heben von Gegenständen im Bereich der Umlenkstellen zu einer stark ungleichmäßigen Belastung der unterschiedlichen Abschnitte des jeweils verwendeten Zurr- oder Anschlagmittels. Dies kann dazu führen, dass der jeweils zu hebende Gegenstand beim Anheben ruckartig seine Lage im jeweiligen Hebezeug ändert, wenn die Wirkung der Gewichtskraft so stark ansteigt, dass die im Bereich der Umlenkstellen zuvor in Folge der Reibung wirkende Hemmung plötzlich überwunden wird.

Die mangelnde Gleiteigenschaft und die dadurch verursachte, beschriebenen Effekte erweisen sich auch bei Zurrguten als problematisch, da diese mit hohen Spannkräften beaufschlagt werden, etwa um Gegenstände bzw. Last oder Ladung zum Transport festzuzurren.

Ausgehend von dem zuvor erläuterten Stand der Technik liegt der vorliegenden Erfindung demnach die Aufgabe zugrunde, ein gattungsgemäßes Schutzelement anzugeben, welches vorteilhafte Gleiteigenschaften aufweist. Ebenfalls soll ein vorteilhaftes Befestigungssystem und eine vorteilhafte Verwendung eines Schutzelements sowie eines Befestigungssystems vorgeschlagen werden.

Diese Aufgabe wird bei dem gattungsgemäßen Schutzrecht dadurch gelöst, dass die Decklage im Wesentlichen tunnelförmig und zumindest teilweise beabstandet von der Unterlage ausgebildet ist.

Dadurch, dass die Decklage im Wesentlichen tunnelförmig und zumindest teilweise beabstandet von der Unterlage ausgebildet ist, kann eine bessere Gleitfähigkeit des Zurr- oder Anschlagmittels erreicht werden. Insbesondere kann eine Reibung zwischen Decklage des Schutzelements und Zurr- oder Anschlagmittel im Wesentlichen vermieden werden. Hierdurch kann ein zu hoher Verlust der Vorspannkraft und eine ungleichmäßige Belastung reduziert oder vermieden werden. Die tunnelförmige Ausgestaltung der Decklage korrespondiert vorzugsweise zu dem oberen Teil eines Tunnels, also Tunnelwänden sowie Tunneldecke. Insbesondere kann die tunnelförmige Decklage bogenförmig und/oder u-förmig ausgebildet sein.

Das Schutzelement kann, insbesondere falls dieses für ein Zurrmittel in Form eines Gurtes verwendet wird, als ein Gurtcontroller oder Abrutschhemmer angesehen werden.

Falls die Unterlage zwischen dem Zurr- oder Anschlagmittel und dem jeweiligen Gegenstand positioniert wird, kann die Unterlage auch nur in Anlage mit einem Teils des Gegenstandes, beispielsweise einem Teil eines Reifens eines Kraftfahrzeugs, sein.

Wie bereits eingangs ausgeführt, kann das Zurr- oder Anschlagmittel insbesondere gurt-, band-, oder seilförmig sei und insbesondere als Gurt, Band oder Seil ausgebildet sein. Beispielsweise ist das Zurr- oder Anschlagmittel zur Übertragung von Zugspannungen ausgebildet. Beispielsweise ist das Zurr- oder Anschlagmittel zugstabil und/oder biegeschlaff. Beispielsweise ist das Zurr- oder Anschlagmittel als Gewebe ausgebildet. Beispielsweise ist das Zurr- oder Anschlagmittel ein textiles Zurr- oder Anschlagmittel.

Vorzugsweise ist das Schutzelement derart ausgebildet, dass ein Zurr- oder Anschlagmittel mit einer Breite von zumindest 35 mm oder 50 mm aufgenommen werden kann.

Das Schutzelement, insbesondere die Unterlage und/oder die Decklage können zumindest teilweise aus einem textilen Material hergestellt sein. Beispielsweise ist das Schutzelement im Wesentlichen schlauchförmig ausgestaltet, wie im Folgenden noch weiter beschrieben wird.

Grundsätzlich ist es möglich, dass das Schutzelement neben der Decklage und der Unterlage noch weitere Lagen aufweist. Vorzugsweise besteht das Schutzelement lediglich aus einer (einschichtigen oder mehrschichtigen) Decklage und einer (einschichtigen oder mehrschichtigen) Unterlage.

Ein besonders sicherer Halt des Schutzelements am jeweiligen Zurr- oder Anschlagmittel lässt sich dadurch gewährleisten, dass das Schutzelement (zumindest abschnittsweise, vorzugsweise entlang der gesamten Länge) schlauchförmig ausgebildet ist. Hierdurch kann die Reibung weiter reduziert werden, da das Zurr- oder Anschlagmittel eine erhöhte Bewegungsfreiheit im Schutzelement hat.

Gemäß einer bevorzugten Ausgestaltung des erfindungsgemäßen Schutzelement ist die Decklage im Wesentlichen derart tunnelförmig und zumindest teilweise beabstandet zu der Unterlage ausgebildet, dass im Wesentlichen keine Kraftübertragung zwischen der Decklage und dem Zurr- oder Anschlagmittel besteht oder stattfindet. Hierdurch kann zuverlässig vermieden werden, dass zwischen Zurr- oder Anschlagmittel und Decklage des Schutzelements im bestimmungsgemäßen Gebrauch einer (erhöhte) Reibung auftritt, wodurch die Gleiteigenschaften des Schutzelements weiter verbessert werden können.

Vorzugsweise ist die Decklage derart tunnelförmig und zumindest teilweise beabstandet zu der Unterlage ausgebildet, dass im Wesentlichen kein Kontakt, insbesondere keinen Reibkontakt, zwischen Decklage und einem in dem Schutzelement angeordneten Zurr- oder Anschlagmittel besteht.

Eine weitere bevorzugte Ausgestaltung des Schutzelements ist dadurch gekennzeichnet, dass der Abstand der Decklage zu der Unterlage entlang der Breite des Schutzelements variiert. Hierdurch kann insbesondere ein variierender Abstand zwischen der Decklage und der Unterlage ermöglicht werden, so dass die Unterlage und die Decklage an den Randbereichen des Schutzelements in konstruktiv günstiger Weise miteinander verbunden werden können. Ebenfalls kann hierdurch in konstruktiv günstiger Weise eine tunnelförmige Decklage des Schutzelements zur Verfügung gestellt werden.

Hinsichtlich einer konstruktiv günstigen Gestaltung des Schutzelements ist es ferner bevorzugt, dass die Decklage zu der Unterlage entlang einer Mittellängsachse des Schutzelements einen im Wesentlichen maximalen Abstand aufweist. Dabei verläuft die Mittellängsachse des Schutzelements beispielsweise entlang der Mittellinie der Unterlage. Vorzugweise nimmt der Abstand der Decklage zu der Unterlage von den Randbereichen des Schutzelements bis hin zur Mittellängsachse des Schutzelements, insbesondere im Wesentlichen kontinuierlich, zu und erreicht sein Maximum entlang der Mittellängsachse des Schutzelements.

Nach einer bevorzugten Ausgestaltung der vorliegenden Erfindung liegt der maximale Abstand in einem Bereich zwischen 0,5 mm und 20 mm, insbesondere in einem Bereich zwischen 1 mm und 10 mm, besonders bevorzugt in einem Bereich zwischen 1,5 mm und 5 mm. Vorgenannte Bereiche ermöglichen eine ausreichende Bewegungsfreiheit eines Zurr- oder Anschlagmittels in dem Schutzelement, so dass die Gleitfähigkeit des in dem Schutzelement angeordneten Zurr- oder Anschlagmittels im Wesentlichen nicht negativ beeinflusst wird.

Hinsichtlich einer günstigen produktionstechnischen Fertigung des Schutzelements ist es ferner bevorzugt, dass die Decklage in Form einer Tunnelvernähung mit der Unterlage vernäht ist. Vorzugsweise ist die Decklage hierzu mittels zweier Längsnähte mit den Randbereichen der Unterlage vernäht. Ist die Decklage mit der Unterlage vernäht, ergibt sich eine besonders stabile und dauerhafte Verbindung insbesondere in Hinblick auf die bei der Verwendung auftretenden Zugkräfte. Es hat sich herausgestellt, dass die erfindungsgemäß vorgesehene Unterlage und Decklage auf dieses Weise besonders sicher und zuverlässig angebunden werden kann.

Eine bevorzugte Ausgestaltung des erfindungsgemäßen Schutzelements ist ferner dadurch gekennzeichnet, dass die Außenseite der Unterlage aus einem Gummimaterial besteht und/oder auf ihrer Außenseite eine Oberflächenstruktur, insbesondere eine Noppen- und/oder Rippenstruktur, aufweist. Durch die Verwendung eines Gummimaterials kann ein hoher Reibungskoeffizient zur Erzielung eines Reibschlusses zwischen Außenseite der Unterlage und dem jeweiligen Gegenstand erreicht werden. Ist alternativ oder zusätzlich eine Oberflächenstruktur, wie eine Noppen- und/oder Rippenstruktur, vorgesehen, kann auf diese Weise zudem ein zumindest bereichsweiser Formschluss mit dem Gegenstand erreicht werden.

Nach einer bevorzugten Ausgestaltung des erfindungsgemäßen Schutzelements weist die Decklage eine größere Breite als die Unterlage auf. Hierdurch kann in vorteilhafter Weise eine tunnelförmige Ausgestaltung der Decklage vorgesehen werden.

Nach einer weiteren bevorzugten Ausgestaltung weist die Unterlage eine Breite in einem Bereich von 30 mm bis 80 mm, insbesondere in einem Bereich von 35 mm bis 75 mm auf. Eine derartige Unterlage des Schutzelements hat sich insbesondere hinsichtlich der Anbindung der Decklage an die Unterlage als vorteilhaft erwiesen. Ebenfalls kann die Unterlage durch die vorgenannte Breite in zuverlässiger Weise die in der Praxis gängigen Zurr- und Anschlagmittel zuverlässig aufnehmen, ohne dass die Zurr- oder Anschlagmittel in Reibkontakt mit der Decklage treten. Dies ist insbesondere für die Gleiteigenschaften eines in dem Schutzelement angeordneten Zurr- oder Anschlagmittels vorteilhaft.

Eine weitere bevorzugte Ausgestaltung des erfindungsgemäßen Schutzelements ist dadurch gekennzeichnet, dass die Innenseite der Unterlage eine zusätzliche Gleitschicht aufweist. Bei einer solchen Gleitschicht kann es sich beispielsweise um eine Kunststofffolie handeln. Dadurch, dass eine Gleitschicht an der Innenseite der Unterlage vorgesehen ist, kann zunächst eine bessere Gleitfähigkeit des Zurr- oder Anschlagmittels auf der Unterlage des Schutzelements erreicht werden. Hierdurch kann ein zu hoher Verlust der Vorspannkraft und eine ungleichmäßige Belastung reduziert oder vermieden werden.

Die Gleitschicht kann beispielsweise aus Polyethylen (PE) hergestellt sein. Es hat sich gezeigt, dass mit diesem Material trotz kostengünstiger Herstellung gute Gleiteigenschaften und damit eine hohe und homogene Kraftübertragung auf den Gegenstand erfolgen kann. Das Polyethylen kann beispielsweise PE-HD (HDPE), PE-LD (LDPE), PE-LLD (LLDPE), PE-HMW oder PE-UHMW sein, um einige nicht abschließende Beispiele zu nennen. Grundsätzlich ist auch die Verwendung anderer Kunststoffe möglich, wie beispielsweise Polypropylen (PP), Polyvinylchlorid (PVC), Polyethylenterephthalat (PET), Ethylen-Tetrafluorethylen (ETFE), Fluorethylenpropylen (FEP), Polylactid (PLA) oder Polytetrafluorethylen (PTFE).

Bei einer bevorzugten Ausgestaltung des Schutzelements ist die Unterlage dazu ausgebildet, direkt an dem Zurr- oder Anschlagmittel anzuliegen. Es hat sich gezeigt, dass aufgrund der tunnelförmigen und zumindest teilweise beabstandeten Decklage auch ohne Vorsehen einer Gleitschicht ausreichende Gleiteigenschaften des erfindungsgemäßen Schutzelements vorgesehen werden können. Insofern kann ein kostengünstiges Schutzelement vorgesehen werden, welches die gestellten Anforderungen an die Gleiteigenschaften zuverlässig erfüllt.

Die eingangs gestellte Aufgabe wird auch durch ein Befestigungssystem mit zumindest einem erfindungsgemäßen Schutzelement sowie mit mindestens einem Zurr- oder Anschlagmittel zum Heben, Spannen oder Zurren von Gegenständen gelöst.

Wie bereits eingangs ausgeführt, kann das Zurr- oder Anschlagmittel insbesondere aus textilem Material hergestellt sein. Beispielsweise weist das Zurr- oder Anschlagmittel eine Breite von zumindest 35 mm auf. Das Zurr- oder Anschlagmittel (beispielsweise ein Zurrgurt) eignet sich dann beispielsweise zum Sichern von Fahrzeugen bis zu 4 t oder bis zu 4,5 t. Beispielsweise weist das Zurr- oder Anschlagmittel eine Breite von zumindest 50 mm auf. Das Zurr- oder Anschlagmittel (beispielsweise ein Zurrgurt) eignet sich dann beispielsweise zum Sichern von Fahrzeugen auch von über 4 t oder von über 4,5 t bis hin zu 20 t. Beispielsweise ist das Zurr- oder Anschlagmittel für eine Zugkraft von mindestens 15.000 Newton oder 25.000 Newton ausgelegt. Typischerweise auftretende Ladungssicherungskräfte können auf diese Weise kompensiert werden.

Bevorzugt ist die Länge des Schutzelements so bemessen, dass zumindest 50% des Radumfangs (typischerweise beträgt der Raddurchmesser bei einer hier anvisierten Verwendung höchstens 1,25 m) abgedeckt werden können. In Abhängigkeit von der Länge es Zurr- oder Anschlagmittels ist dies beispielsweise zumindest 20%, vorzugsweise zumindest 40%, beispielsweise in etwa 50% der Länge des Zurr- oder Anschlagmittels.

Eine bevorzugte Ausgestaltung des erfindungsgemäßen Befestigungssystems umfasst ferner zumindest einen Haken als Befestigungsmittel zur Befestigung des Zurr- oder Anschlagmittels auf einem Transporter, insbesondere auf der Ladefläche eines Transporters. Es können beispielsweise auch zwei oder zumindest drei Befestigungsmittel vorgesehen sein. Beispielsweise bildet das Befestigungssystem ein Zwei-Punkt- oder ein Drei-Punkt-System. Der zumindest eine Haken kann beispielsweise mit einer Fixierplatte verbindbar sein, wobei die Fixierplatte unter einem Blech, insbesondere einem Lochblech, eines Transporters anordenbar ist. Der zumindest eine Haken kann beispielsweise eine gewundene Form aufweisen, wodurch die von dem Haken aufgenommenen Kräfte besser über die Fläche eines mit dem Haken verbundenen Lochblechs verteilt werden können. Der zumindest eine Haken kann derart ausgestaltet sein, dass dieser im 45°-Winkel mit einem Lochblech verbindbar ist. Insbesondere sind die Haken dazu ausgestaltet, in Langlöcher einer Ladefläche eingehakt zu werden.

Eine weitere vorteilhafte Ausgestaltung des Befestigungssystems ist dadurch gekennzeichnet, dass das Zurr- oder Anschlagmittel eine Lashing Capacity von zumindest 1500 daN oder 2500 daN im Bereich des Fahrzeugtransports aufweist. Die sogenannte Lashing Capacity gibt die Belastbarbarkeit des Zurr- oder Anschlagmittels an. Diese kann beispielsweise auch als zulässige Zugkraft bezeichnet werden. Die Lashing Capacity gibt insbesondere die maximale Kraft im geraden Zug an, für die ein Anschlag- oder Zurrmittel im Betrieb ausgelegt ist.

Das Zurr- oder Anschlagmittel kann derart ausgelegt sein, dass es bei bestimmungsgemäßer Verwendung eine Dehnfähigkeit von unter 4%, aufweist.

Eine weitere bevorzugte Ausgestaltung des Befestigungssystems ist dadurch gekennzeichnet, dass das Befestigungssystem derart ausgestaltet ist, dass das Befestigungssystem einen ETA-Wert von zumindest 0,5 aufweist. Hierdurch wird ein bevorzugtes Zusammenspiel zwischen Zurr- und Anschlagmittel und Schutzelement ermöglicht. Beispielsweise drückt der ETA-Wert das Verhältnis von Vorspannkraft vor den Schutzelement und Vorspannkraft hinter dem Schutzelement aus. Insbesondere kann ein ETA-Wert auch ohne Vorsehen einer Gleitschicht von zumindest 0,5 erreicht werden.

Die eingangs angegebene Aufgabe wird auch durch eine Verwendung eines erfindungsgemäßen Schutzelements oder durch eine Verwendung eines erfindungsgemäßen Befestigungssystems zur Befestigung eines zu transportierenden Gegenstandes auf einem Transporter, insbesondere eines Fahrzeugs auf einem Fahrzeugtransporter, gelöst.

Der zu transportierende Gegenstand kann beispielsweise ein Fahrzeug, insbesondere ein Kraftfahrzeug sein, beispielsweise ein Pkw, Kleinbus, Nkw-Kombi (bis 4t) oder auch ein mittelschweres bis schweres Nutzfahrzeug (bis zu 20t). Der Transporter kann dementsprechend insbesondere ein Fahrzeugtransporter sein. Unter einem Fahrzeugtransporter wird insbesondere ein Fahrzeug verstanden, dessen Ladfläche Fahrbahnelemente aufweist und zur kraft- und/oder formschlüssigen Aufnahme von Ladungssicherungshilfsmitteln geeignet ist, sodass die notwendigen Ladungssicherungskräfte eingeleitet werden können. Beispielsweise weist der Fahrzeugtransporter auf seiner Ladefläche Mulden und/oder Brillen auf, die zur Absenkung und Fixierung der Räder des zu fixierenden bzw. transportieren Fahrzeugs dienen. Beispielweise kann es sich bei den Fahrbahnelementen auch um Befestigungsbleche, insbesondere um Lochbleche, handeln.

Das Zurr- oder Anschlagmittel kann mit dem beschriebenen Schutzelement dazu verwendet werden, eine ungefederte Masse (ein oder mehrere Räder des Fahrzeugs) zu sichern, insbesondere durch Niederzurren.

Ein wie beschriebenes Schutzelement bzw. Befestigungssystem ist insbesondere zur Ladungssicherung eines Fahrzeugs auf einem Fahrzeugtransporter durch Niederzurren eines Rads des Fahrzeugs besonders vorteilhaft. Die Unterlage des Schutzelements wird hierzu mit dem darauf angeordneten Zurrmittel (beispielsweise ein Zurrgurt) auf dem Rad (Reifen) positioniert. Durch die im Wesentlichen tunnelförmig und zumindest teilweise von der Unterlage beabstandete Decklage werden dabei vorteilhafte Gleiteigenschaften erzielt, während durch die äußere Schicht der Unterlage ein vorteilhafter Reib- und/oder Formschluss mit dem Rad erzielt werden kann. Dabei ist die Länge des Schutzelements vorzugsweise so ausgelegt, dass das Zurrmittel das Rad nicht zu berühren braucht. Die Länge des Schutzelements beträgt beispielsweise zumindest 50% des Umfangs des zu sichernden Rades.

Die in Zusammenhang mit einzelnen Aspekten beschriebenen Ausgestaltungen sollen dabei auch in Bezug auf die übrigen Aspekte als offenbart gelten.

Im Weiteren soll die Erfindung anhand von Ausführungsbeispielen in Verbindung mit der Zeichnung näher erläutert werden. Die Zeichnung zeigt in
- Fig. 1: eine perspektivische Ansicht eines Ausführungsbeispiels eines Befestigungssystems gemäß der Erfindung mit Schutzelement und Zurrgurt;
- Fig. 2A: eine Draufsicht des Befestigungssystems aus Fig. 1;
- Fig. 2B: eine Querschnittsansicht des Befestigungssystems aus Fig. 2A;
- Fig. 3A: eine Draufsicht eines weiteren Ausführungsbeispiels eines Befestigungssystems gemäß der Erfindung mit Schutzelement und Zurrgurt;
- Fig. 3B: eine Querschnittsansicht des Befestigungssystems aus Fig. 3A; sowie
- Fig. 4: eine Seitenansicht einer beispielhaften Verwendung eines Befestigungssystems.

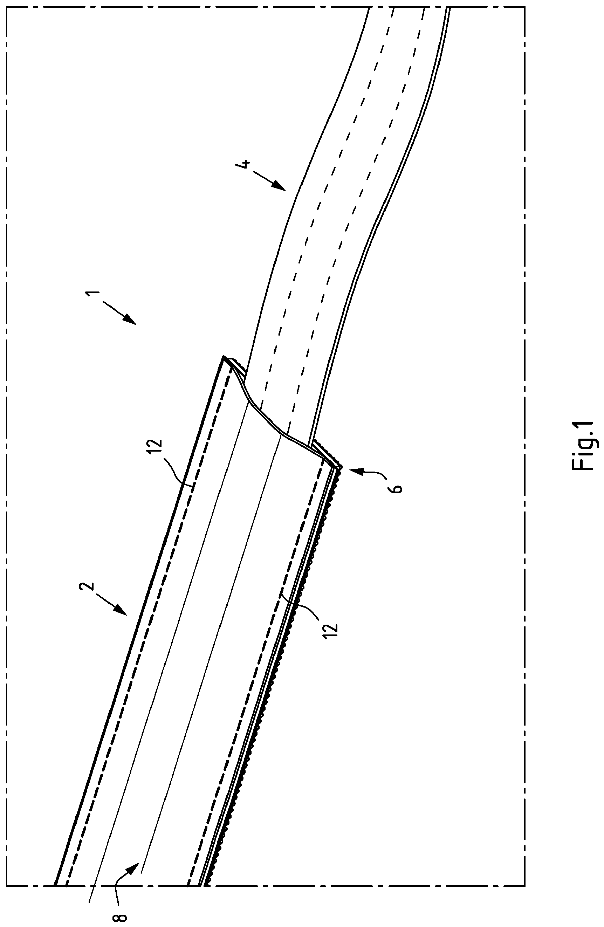

Fig. 1 zeigt zunächst eine perspektivische Ansicht eines Ausführungsbeispiels eines Befestigungssystems 1 gemäß der Erfindung. Das Befestigungssystem 1 umfasst ein Ausführungsbeispiel eines erfindungsgemäßen Schutzelements 2 und einen textilen Zurrgurt 4, welcher lediglich als ein Beispiel eines Zurr- oder Anschlagmittels dient, das im Rahmen der Erfindung verwendet werden kann.

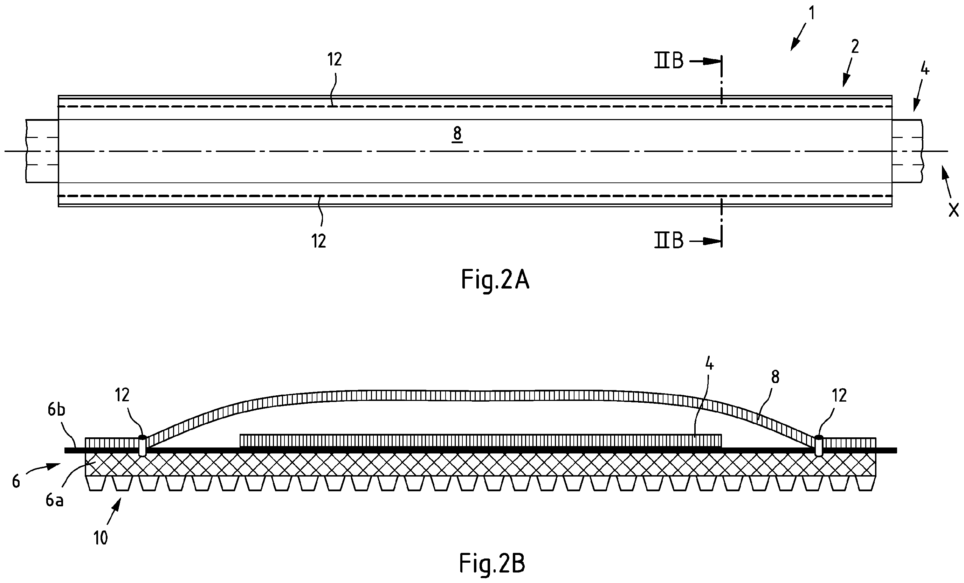

Das Befestigungssystem 1 ist auch in Fig. 2A und 2B dargestellt. Dabei zeigt Fig. 2A eine Draufsicht des Befestigungssystems 1 und Fig. 2B eine Querschnittsansicht des Befestigungssystems 1 entlang der in Fig. 2A eingezeichneten Linie IIB. Das Befestigungssystem 1 wird nun mit Verweis auf die Fig. 1, 2A und 2B näher beschrieben.

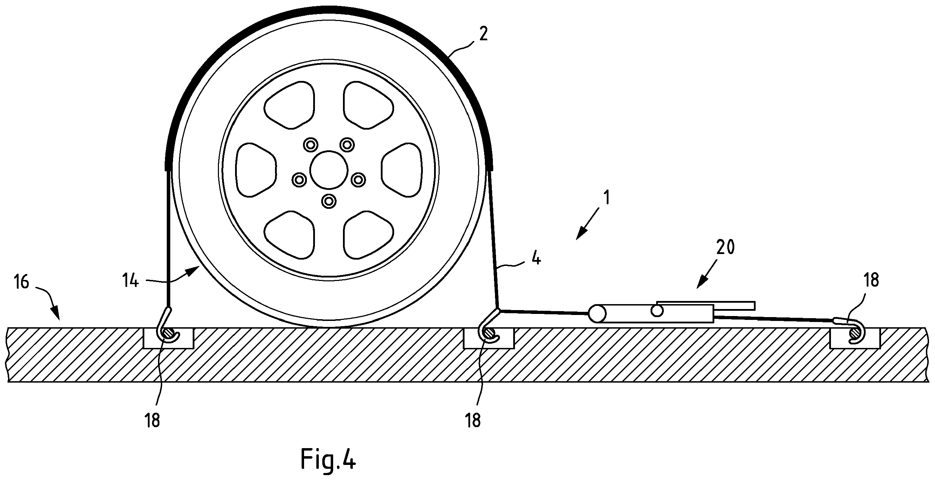

Der Zurrgurt 4 ist zusammen mit dem Schutzelement 2 in diesem Fall zum Spannen oder Zurren eines Rades eines Fahrzeugs vorgesehen, wie im Detail noch in Zusammenhang mit Fig. 4 beschrieben wird. Es kann jedoch gleichfalls ein anderes Zurr- oder Anschlagmittel vorgesehen werden und mit einem wie beschriebenen Schutzelement verwendet werden.

Das Schutzelement 2 weist eine flexible Unterlage 6 zur Positionierung zwischen dem Zurrgurt 4 und dem jeweiligen Gegenstand auf. Die Unterlage 6 weist an ihrer Außenseite eine Schicht 6a zur Anlage an dem Gegenstand und an ihrer Innenseite eine Gleitschicht 6b zur Anlage an dem Zurr- oder Anschlagmittel 4 auf. Weiterhin weist das Schutzelement 2 eine mit der Unterlage 6 verbundenen flexiblen Decklage 8 auf. Die flexible Decklage 8 ist tunnelförmig mit der Unterlage 6 über Nähte 12, welche in Längsrichtung entlang der beiden Randbereiche des Schutzelements 2 verlaufen, vernäht. Die Nähte 12 verbinden die Decklage 8 mit beiden Schichten 6a, 6b der Unterlage 6.

Durch die tunnelförmige Vernähung ist die Decklage 8 im Wesentlichen tunnelförmig ausgebildet und zumindest teilweise beabstandet von der Unterlage 6 ausgebildet. Es ist ersichtlich dass der Abstand der Decklage 8 von der Unterlage 6 von den Randbereichen des Schutzelements hin zur Mittellängsachse X des Schutzelements 2 zunimmt. Die Decklage 8 weist entlang der Mittellängsachse X des Schutzelements im Wesentlichen den maximalen Abstand von der Unterlage 6 auf.

Durch die Nähte 12 wird die Kunststofffolie perforiert und sicher im Schutzelement 12 fixiert. Im Ergebnis ist das Schutzelement 2 schlauchförmig ausgebildet. Dabei ist der durch das Schutzelement 2 bereitgestellte Aufnahmeraum für das Zurr- oder Anschlagmittel 4 so bemessen, dass das Zurr- oder Anschlagmittel 4 im Wesentlichen frei in dem Schutzelement 2 verschiebbar ist, insbesondere kein Kontakt und/oder Reibung zwischen dem Zurr- oder Anschlagmittel und der Decklage 8 auftritt.

Die äußere Schicht 6a der Unterlage 6 besteht aus einem Gummimaterial und weist auf ihrer Außenseite eine Oberflächenstruktur in Form einer Noppenstruktur 10 auf. Dadurch ist die Außenseite der äußeren Schicht 6a der Unterlage 6 dazu ausgebildet, eine reib- und/oder formschlüssige Verbindung mit dem jeweiligen Gegenstand herzustellen.

Die innere Schicht 6b der Unterlage 6 ist eine Kunststofffolie. Die Kunststofffolie 6b ist in diesem Beispiel aus Polyethylen (PE) hergestellt. Grundsätzlich kann die Kunststofffolie 6b jedoch auch aus anderen geeigneten Kunststoffen hergestellt sein. Die Dicke der Kunststofffolie 6b beträgt hier weniger als 120 µm. Um die Gleiteigenschaften der inneren Schicht 6b weiter zu verbessern, weist die Kunststofffolie 6b Additive zur Gleitförderung auf.

Dabei erstreckt sich die durch die Kunststofffolie ausgebildete innere Schicht 6b der Unterlage 6 über die gesamte Länge und Breite der Innenseite der Unterlage 6, sodass der Zurrgurt 4 nur mit der inneren Schicht 6b und nicht mit der äußeren Schicht 6a (oder einer anderen möglicherweise vorgesehenen weiteren Zwischenschicht) der Unterlage 6 in Kontakt kommt. Es ist allerdings ebenfalls möglich, dass sich die Kunststofffolie 6b nur über einen bestimmten Längsabschnitt der Innenseite der Unterlage 6 erstreckt.

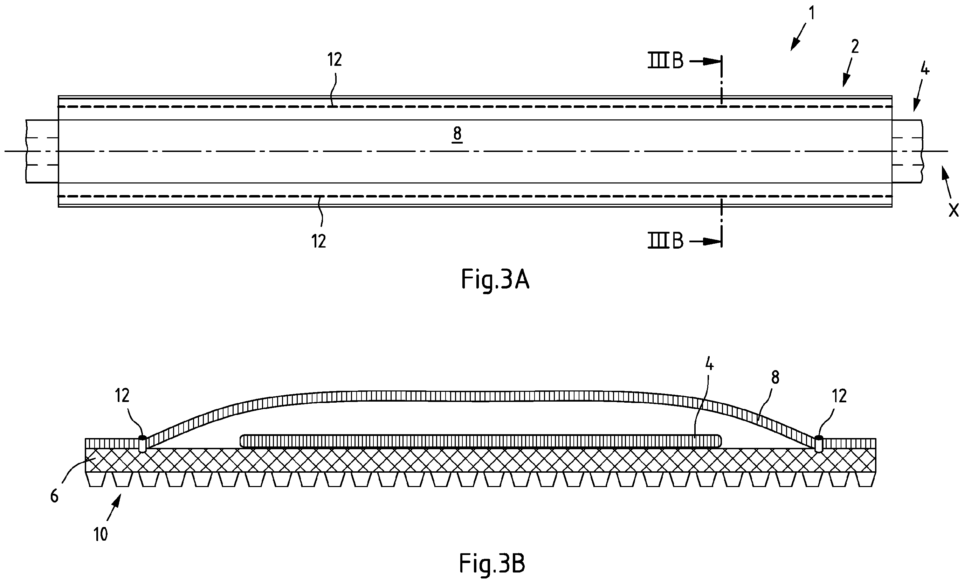

Fig. 3A und Fig. 3B zeigen ein weiteres Ausführungsbeispiels gemäß der Erfindung mit Schutzelement 2 und Zurrgurt 4. Dabei zeigt Fig. 3A eine Draufsicht des weiteren Ausführungsbeispiels des Befestigungssystems 1 und Fig. 3B eine Querschnittsansicht des weiteren Ausführungsbeispiels des Befestigungssystems 1 entlang der in Fig.3A eingezeichneten Linie IIIB.

Im Unterschied zu dem in den Fig. 1, 2A und 2B dargestellten Befestigungssystem 1 weist das in den Fig. 3A und 3B dargestellte Schutzelement 2 an der Innenseite der Unterlage 6 keine Gleitschicht auf. Denn es wurde festgestellt, dass aufgrund der der tunnelförmigen und zumindest teilweise beabstandeten Decklage 8 auch ohne Vorsehen einer Gleitschicht ausreichende Gleiteigenschaften des erfindungsgemäßen Schutzelements 2 bzw. des erfindungsgemäßen Befestigungssystems 1 vorgesehen werden können.

Fig. 4 zeigt zeigt in einer Seitenansicht eine beispielhafte Verwendung des Befestigungssystems 1. Das Befestigungssystem 1 wird hier zur Ladungssicherung eines Fahrzeugs (nicht dargestellt) auf einem Fahrzeugtransporter (nicht dargestellt) eingesetzt, indem ein Rad 14 des Fahrzeugs durch niederzurren auf der mit Fahrbahnelementen versehenen Ladefläche 16 fixiert wird. Das Befestigungssystem weist hier weiterhin als Haken ausgebildete Befestigungsmittel 18 auf, die das Befestigungssystem 1 mit der Ladefläche 16 des Fahrzeugtransporters verbinden. Ebenfalls ist ein Mittel 20 zum Spannen oder Zurren des Zurrgurtes 4 in Form eines Spanngeräts oder einer Ratsche vorgesehen. Das Schutzelement 2 wird mit dem Zurrgurt 4 auf dem Rad 14, das heißt dem Reifen des Rades 14 positioniert, sodass die Unterlage 6 des Schutzelements 2 zwischen dem Zurrgurt 4 und dem Rad 14 angeordnet ist. Durch Beabstandung der Decklage 8 des Schutzelements 2 von dem Zurrgurt 4 wird dabei eine vorteilhafte Gleiteigenschaft des Schutzelements 6 erzielt, während durch die äußere Schicht 6a der Unterlage 6 ein vorteilhafter Reib- und/oder Formschluss mit dem Rad 14 erzielt werden kann. Mithilfe der Ratsche 20 kann eine das Rad 14 fixierende Zugkraft auf den Zurrgurt 4 ausgeübt werden. Aufgrund der durch die Kunststofffolie erzielten, vorteilhaften Gleiteigenschaft des Schutzelements 2 erfolgt nur ein geringer Verlust der aufgebrachten Zugkraft. Zudem wird die Kraft zur Ladungssicherung sehr homogen in radial einwärts wirkender Richtung auf das Rad 14 aufgebracht.

## Patentansprüche

1. Schutzelement (2) für ein Zurr- oder Anschlagmittel (4) zum Heben, Spannen oder Zurren von Gegenständen (14) umfassend:
- zumindest eine flexible Unterlage (6) zur Positionierung zwischen dem Zurr- oder Anschlagmittel (4) und dem jeweiligen Gegenstand (14), sowie
- zumindest eine mit der Unterlage (6) verbundene flexible Decklage (8), **dadurch gekennzeichnet,**
- **dass** die Decklage (8) im Wesentlichen tunnelförmig und zumindest teilweise beabstandet von der Unterlage (6) ausgebildet ist.

2. Schutzelement nach Anspruch 1,
**dadurch gekennzeichnet,**
- **dass** die Decklage (8) im Wesentlichen derart tunnelförmig und zumindest teilweise beabstandet von der Unterlage (6) ausgebildet ist, dass kein Kontakt zwischen der Decklage (8) und dem Zurr- oder Anschlagmittel (4) besteht.

3. Schutzelement nach Anspruch 1 oder 2,
**dadurch gekennzeichnet,**
- **dass** der Abstand der Decklage (8) zu der Unterlage (6) entlang der Breite des Schutzelements (2) variiert.

4. Schutzelement nach Anspruch 3,
**dadurch gekennzeichnet,**
- **dass** die Decklage (8) zu der Unterlage (6) entlang einer Mittellängsachse (X) des Schutzelements (2) einen im Wesentlichen maximalen Abstand aufweist.

5. Schutzelement nach Anspruch 4,
**dadurch gekennzeichnet,**
- **dass** der maximale Abstand in einem Bereich zwischen 0,5 mm und 20 mm, insbesondere in einem Bereich zwischen 1 mm und 10 mm, besonders bevorzugt in einem Bereich zwischen 1,5 mm und 5 mm, liegt.

6. Schutzelement nach einem der Ansprüche 1 bis 5,
**dadurch gekennzeichnet,**
- **dass** die Decklage (8) in Form einer Tunnelvernähung mit der Unterlage (6) vernäht ist.

7. Schutzelement nach einem der Ansprüche 1 bis 6,
**dadurch gekennzeichnet,**
**dass** die Außenseite (6a) der Unterlage (6) aus einem Gummimaterial besteht und/oder die Außenseite (6a) der Unterlage (6) eine Oberflächenstruktur, insbesondere eine Noppen- und/oder Rippenstruktur, aufweist.

8. Schutzelement nach einem der Ansprüche 1 bis 7,
**dadurch gekennzeichnet,**
- **dass** die Decklage (8) eine größere Breite als die Unterlage (6) aufweist und/oder
- **dass** die Unterlage (6) eine Breite in einem Bereich von 30 mm bis 80 mm, insbesondere in einem Bereich von 35 mm bis 75 mm aufweist.

9. Schutzelement nach einem der Ansprüche 1 bis 8,
**dadurch gekennzeichnet,**
- **dass** die Innenseite der Unterlage (6) eine zusätzliche Gleitschicht (6b) aufweist oder
- **dass** die Innenseite der Unterlage (6) dazu ausgebildet ist, direkt an dem Zurr- oder Anschlagmittel (4) anzuliegen.

10. Befestigungssystem (1) zur Befestigung eines zu transportierenden Gegenstandes (14) auf einem Transporter, insbesondere eines Fahrzeugs auf einem Fahrzeugtransporter, umfassend:
- zumindest ein Schutzelement (2) nach einem der vorhergehende Ansprüche und
- zumindest ein Zurr- oder Anschlagmittel (4) zum Heben, Spannen oder Zurren von Gegenständen (14).

11. Befestigungssystem nach Anspruch 10 ferner umfassend:
- zumindest einen Haken (18) zur Befestigung des Zurr- oder Anschlagmittels (4) auf einem Transporter, insbesondere auf einer Ladefläche eines Transporters.

12. Befestigungssystem nach Anspruch 10 oder 11,
- wobei das Zurr- oder Anschlagmittel (4) eine Lashing Capacity von zumindest 1500 daN oder 2500 daN aufweist.

13. Befestigungssystem nach einem der Ansprüche 10 bis 12,
- wobei das Zurr- oder Anschlagmittel (4) eine Dehnfähigkeit von unter 4 Prozent aufweist.

14. Befestigungssystem nach einem der Ansprüche 10 bis 13,
- wobei das Befestigungssystem (1) derart ausgestaltet ist, dass das Befestigungssystem (1) einen ETA-Wert von zumindest 0,5 aufweist.

15. Verwendung eines Schutzelements (2) nach einem der vorgenannten Ansprüche oder eines Befestigungssystems (1) nach einem der vorgenannten Ansprüche zur Befestigung eines zu transportierenden Gegenstandes (14) auf einem Transporter, insbesondere eines Fahrzeugs auf einem Fahrzeugtransporter.
